**Europäisches Patentamt**

**European Patent Office**

**Office européen des brevets**

(19)

(11) Veröffentlichungsnummer: **0 075 297**
**B1**

(12)

# EUROPÄISCHE PATENTSCHRIFT

(45) Veröffentlichungstag der Patentschrift:
**16.07.86**

(21) Anmeldenummer: **82108610.5**

(22) Anmeldetag: **17.09.82**

(51) Int. Cl.⁴: **C 02 F 3/30**, C 02 F 3/10,
B 01 J 8/20

(54) Verfahren zur biologischen Denitrifikation von Abwasser.

(30) Priorität: **17.09.81 DE 3137062**

(43) Veröffentlichungstag der Anmeldung:
**30.03.83 Patentblatt 83/13**

(45) Bekanntmachung des Hinweises auf die Patenterteilung:
**16.07.86 Patentblatt 86/29**

(84) Benannte Vertragsstaaten:
**AT CH DE FR GB IT LI NL SE**

(56) Entgegenhaltungen:
**EP - A - 0 046 901**
**DE - A - 2 002 926**
**DE - A - 2 549 415**
**GB - A - 2 006 181**
**US - A - 3 956 129**

(73) Patentinhaber: **Linde Aktiengesellschaft,
Abraham-Lincoln-Strasse 21, D-6200 Wiesbaden (DE)**

(72) Erfinder: **Fuchs, Uwe, Heiterwanger Strasse 46,
D-8000 München 70 (DE)**
Erfinder: **Reimann, Hans, Dr. rer. nat.,
Rudolf-Wilke-Weg 21, D-8000 München 71 (DE)**

(74) Vertreter: **Schaefer, Gerhard, Dr., Linde
Aktiengesellschaft Zentrale Patentabteilung,
D-8023 Höllriegelskreuth (DE)**

**Beschreibung**

Die Erfindung betrifft ein Verfahren zur biologischen Denitrifikation von Abwasser, bei dem das zu denitrifizierende Abwasser in Gegenwart einer Kohlenstoffquelle durch einen Reaktor geleitet wird, in dem die denitrifizierenden Bakterien auf einem Trägermaterial angesiedelt werden.

Bei einem solchen bekannten Verfahren wird üblicherweise Sand, Aktivkohle oder Kies als Trägermaterial für die denitrifizierenden Bakterien verwendet. Dabei bilden die anoxischen Bakteriengattungen und Mikroorganismen auf den Trägerteilchen eine nitrit- und nitratreduzierende Biomasse, wobei die Trägerteilchen gleichzeitig als Filter für die im Abwasser suspendierten Feststoffe wirken. Aufgrund dieser Filterwirkung und aufgrund eines übermässigen Bakterienwachstums auf den Teilchen, das sich infolge der bei Vorhandensein einer ausreichenden Kohlenstoffquelle ablaufenden Nitrit- und Nitratreduktion ohne weiteres einstellen kann, neigen entsprechende Reaktoren dazu, leicht zu verstopfen, was hohe Strömungsverluste und eine verminderte Denitrifikationsleistung nach sich zieht.

Darüber hinaus ist aus der DE-A 2 002 926 ein Verfahren zur biologischen Reinigung von Abwasser unter Verwendung von jeweils eigenen, übereinander angeordneten Tropfkörpern für einen BSB-Abbau, für eine Nitrifikation und für eine Denitrifikation bekannt, bei dem das Abwasser in allen Tropfkörpern über feststehende, aus offenporigem Kunststoffschaum gebildete Tropfkörperelemente verrieselt wird. Dabei ist besonders darauf hingewiesen, dass bei Verwendung eines offenporigen Kunststoffschaums als Ansiedlungsfläche für den biologischen Rasen eines Tropfkörpers die Gefahr gegeben ist, dass dieser vollkommen zuwachsen kann, was Verstopfungen des Tropfkörpers und Behinderungen des Stoffaustausches nach sich ziehen würde. Zur Vermeidung dieser Nachteile ist bei diesem bekannten Verfahren beim BSB-Abbau und bei der Nitrifikation eine direkte Zwangsbelüftung des den biologischen Rasen tragenden Kunststoffschaums und bei der Denitrifikation ein Arbeiten ohne die Zufuhr einer Kohlenstoffquelle vorgesehen. Damit sind die Denitrifikanten aber, die unter günstigen Bedingungen schnell wachsende Mikroorganismen sind, aufgrund von Nährstoffmangel zu einem langsamen Wachstum gezwungen, wodurch zwar die Verstopfungsgefahr des Topfkörpers umgangen werden kann, die Denitrifikationsleistung des Tropfkörpers aber gering ist.

Aus der DE-A 2 549 415 ist schliesslich ein Denitrifikationsverfahren bekannt, bei dem ein mit organischen Substanzen als Kohlenstoffdonator versetzter Rohwasserstrom denitrifiziert und dazu im Aufwärts- oder Abwärtsstrom über schwimmfähige, als Träger für die Denitrifikanten dienende, kugelförmige Trägerteilchen mit rauher Oberflächenstruktur geleitet wird. Die Ansiedlung der Denitrifikanten nur auf der Oberfläche der Trägerteilchen bringt es dabei mit sich, dass die Denitrifikanten bei mechanischer Einwirkung nicht vor Abrieb geschützt sind und mit dem zu behandelnden Abwasser aus dem Reaktor ausgetragen werden, was wiederum eine verringerte Denitrifikationsleistung des Reaktors nach sich zieht.

Abgesehen von Denitrifikationsverfahren ist es auch bei anaeroben Abwasserreinigungsverfahren bekannt, die anaeroben Mikroorganismen auf einem offenporigen Trägermaterial anzusiedeln. Aus der EP-A 46 901 ist ein entsprechendes Verfahren zur anaeroben biologischen Reinigung von organische Verunreinigungen enthaltenden Abwässern bekannt, bei dem das Abwasser durch mindestens einen Reaktor geleitet wird, in dem die anaeroben Mikroorganismen auf spezifisch leichten, eine offenporige Struktur aufweisenden Trägerteilchen, z.B. Polyurethan-Schaumstoffträgerteilchen, wachsen. Anaerobe Mikroorganismen wachsen aber im Gegensatz zu denitrifizierenden Mikroorganismen auch bei ausreichendem Nährstoffangebot sehr langsam, so dass bei anaeroben Mikroorganismen die Gefahr des Zuwachsens von offenporigen Trägerteilchen in kurzer Zeit kaum gegeben ist.

Der Erfindung liegt die Aufgabe zugrunde, ein Verfahren der eingangs genannten Art so auszugestalten, dass auf einfache und wirtschaftliche Weise unter Einhaltung niedriger Verweilzeiten des Abwassers im Reaktor eine hohe Denitrifikationsleistung erreicht werden kann.

Diese Aufgabe wird erfindungsgemäss dadurch gelöst, dass in den Reaktor als Trägermaterial für die denitrifizierenden Bakterien in stückiger Form offenzellige Schaumstoffteilchen mit geringem spezifischem Gewicht im trockenen Zustand von 20 bis 200 kg/m³, mit einem Volumen von 0,1 bis 75 cm³ und mit Makroporen von 0,1 bis 5 mm eingelagert werden.

Die Verwendung solcher offenzelliger Schaumstoffteilchen als Trägermaterial für die denitrifizierenden Bakterien bietet diesen eine grosse aktive Oberfläche zur Ansiedlung. Durch die offenzellige Struktur und die offenen Makroporen der Schaumstoffteilchen werden dabei die Bakterien zu einem dezentralisierten Wachstum gezwungen, wodurch sich zum einen eine grosse Stoffaustauschfläche ergibt und zum anderen ein Zusammenballen von Bakterienmasse mit einem übermässigen Bakterienwachstum von vornherein beeinträchtigt wird. Ausserdem ist bei den angegebenen Grössen der einzelnen Makroporen ein Verstopfen der Poren durch Verunreinigungen weitgehend ausgeschlossen, so dass durchaus Abwässer mit Schwebstoffkonzentrationswerten über 200 mg/l behandelt werden können. Da dabei die Bakterien fest in den Poren bis ins Innere der Schaumstoffteilchen angesiedelt sind, sind sie vor Abrieb durch Reibung der Schaumstoffteilchen untereinander sicher geschützt, was stabile Bakterienansammlungen gewährleistet. Entsprechende Schaumstoffteilchen können des weiteren leicht im Reaktor zurückbehalten werden. Insgesamt ergibt sich somit eine entsprechend hohe Konzentration an suspendierter Biomasse, woraus eine grosse Belastbarkeit des Reaktors mit Abwasser oder umgekehrt ausgedrückt eine entsprechend

geringe Aufenthaltszeit des Abwassers im Reaktor oder eine Einsparung an Reaktorvolumen resultiert.

Wird das erfindungsgemässe Verfahren bei einer einem Nitrifikationsvorgang nachgeschalteten Denitrifikationsstufe eingesetzt, braucht die Nachklärung der Denitrifikationsstufe nur klein ausgebildet zu sein oder kann in günstigen Fällen ganz entfallen, da der Ablauf des Reaktors aufgrund des Filtereffektes der Schaumstoffteilchen weitgehend frei von suspendierten Feststoffen ist. Dabei ist lediglich durch geeignete Einrichtungen, beispielsweise ein einfaches Sieb, darauf zu achten, dass die Schaumstoffteilchen mit dem Ablauf nicht aus dem Reaktor ausgetragen werden.

Wird das erfindungsgemässe Verfahren dagegen bei einer einer BSB-Abbaustufe und einer Nitrifikationsstufe vorgeschalteten Denitrifikationsstufe eingesetzt, kann neben einer Volumenverkleinerung des Denitrifikationsreaktors auch das Volumen der üblicherweise der Nitrifikationsstufe nachgeschalteten Nachklärung verkleinert werden.

Als besonders geeignete Materialien für die Herstellung der Schaumstoffteilchen kommen Polyurethan, Harnstoff-Formaldehydharze, Polyäthylen, Polypropylen oder Silikonpolymere oder Mischungen aus zwei oder mehreren der genannten Werkstoffe in Frage. Zur Erzielung der Makroporen können diese geschäumt oder gesintert werden.

Bei der Einlagerung der Schaumstoffteilchen in den Reaktor wird mit Vorteil so vorgegangen, dass der Volumenanteil der Schaumstoffteilchen am Gesamtvolumen des Reaktors auf 10 bis 90% eingestellt wird. Je nach Fülldichte und Beschaffenheit der Schaumstoffteilchen lässt sich damit in Abhängigkeit der Belastung des zu behandelnden Abwassers ein bestimmter Reaktortyp erzeugen.

Zweckmässigerweise wird der Reaktor bei einem Volumenanteil der Schaumstoffteilchen jeweils am Gesamtvolumen des Reaktors von 10 bis 40% als voll durchmischtes Becken, bei einem Volumenanteil von 40 bis 70% als Schwebebett- und/oder als Wirbelbett-Reaktor und bei einem Volumenanteil von 70 bis 90% als Festbett-Reaktor betrieben.

In den beiden ersten Fällen ist im allgemeinen ein Einleiten des Abwassers am Boden des Reaktors ausreichend, um die mit denitrifizierender Biomasse beladenen Schaumstoffteilchen in Schwebe zu halten. Ausserdem kann die Aufwärtsströmung durch eine zusätzliche Energiezuführung in Form von rezirkuliertem, behandeltem Abwasser verstärkt werden. Zur Verbesserung des Stoffumsatzes kann dabei im Reaktor noch eine Rühreinrichtung, die beispielsweise bei einem voll durchmischten Becken ein sich langsam drehendes Paddelwerk oder bei einem Schwebe- und/oder Wirbelbett ein einfacher Rührstab sein kann, angeordnet sein.

Wird der Reaktor als Festbett betrieben, wird der Zulauf des zu denitrifizierenden Abwassers oben am Reaktor und der Ablauf des denitrifizierten Abwassers unten am Reaktor angeschlossen. Der dann mögliche Volumenanteil der Schaumstoffteilchen am Gesamtvolumen des Reaktors von 70 bis 90% erlaubt eine besonders hohe Biomassenkonzentration im Reaktor.

Zum Entfernen von angelagerten Schwebstoffen kann gegebenenfalls periodisch in die Reaktoren Spülflüssigkeit, die reines Wasser oder aus dem Reaktor abgezogenes, gereinigtes Wasser sein kann, eingeleitet werden. Es können aber auch andere, für Filterbetten bekannte Regenerierungsverfahren für die Regenerierung der Schaumstoffteilchen, wie beispielsweise mechanische Regenrierungsverfahren, bei denen die Schaumstoffteilchen mit Hilfe von Rühreinrichtungen gegebenenfalls unter Einleiten von Spülluft heftig bewegt werden, verwendet werden. In allen Fällen ist jedoch darauf zu achten, dass in den Poren der Schaumstoffteilchen eine ausreichende Biomassenkonzentration aus denitrifizierenden Mikroorganismen zurückbleibt, um nach Abschluss des Regeneriervorganges die Leistung des Prozesses voll aufrecht erhalten zu können.

Nachstehend sind 3 Zahlenbeispiele angegeben. Die beiden ersten Zahlenbeispiele beziehen sich auf Abwasserreinigungsanlagen, bei denen das zu behandelnde Abwasser zuerst durch einen unter anoxischen Bedingungen betriebenen, im ersten Fall als volldurchmischtes Becken und im zweiten Fall als Schwebebett- oder Wirbelbettreaktor ausgebildeten Denitrifikätionsreaktor mit einem Trägermaterial aus offenzelligen Schaumstoffteilchen, danach durch ein Belebungsbecken und zuletzt durch ein Nitrifikationsbecken mit Nachklärbecken geleitet wird und bei denen ein Teilstrom des aus dem Nitrifikationsbecken ablaufenden gereinigten Abwassers in den Denitrifikationsreaktor zurückgeführt wird. Das dritte Zahlenbeispiel bezieht sich dagegen auf eine Abwasserreinigungsanlage, bei der einem Belebungsbecken und einem Nitrifikationsbecken mit Nachklärung ein als Festbett betriebener Denitrifikationsreaktor mit einer Füllung aus offenzelligen Schaumstoffteilchen nachgeschaltet ist und bei der ein Teilstrom des behandelten Abwassers vom Denitrifikationsreaktor zum Nitrifikationsbecken zurückgeleitet wird.

|  |  | Fall 1 volldurchmischter Reaktor | Fall 2 Wirbel-/ Schwebebett | Fall 3 Festbett |
|---|---|---|---|---|
| Abwassermenge | m³/h | 50 | 50 | 50 |
| Abwasserzusammensetzung: |  |  |  |  |
| $BSB_5$ | mg/l | 2000 | 2000 | 2000 |
| $NH_4^+$ | mgN/l | 200 | 200 | 200 |
| org N | mgN/l | 50 | 50 | 50 |
| $NO_3^-$ | mgN/l | <1 | <1 | <1 |
| ε – N | mgN/l | 250 | 250 | 250 |
| Ablaufzusammensetzung: |  |  |  |  |
| $BSB_5$– vor Denitrifikationsst. | kg/h | 100 | 100 | 28 |
| $BSB_5$ nach Dentrifikationsst. | kg/h | 70 | 70 | 1 |
| $NH_4^+$ vor Dentrifikationsst. | kgN/h | 10 | 10 | 2,6 |
| $NH_4^+$ nach Dentrifikationsst. | kgN/h | 11 | 11 | 0,4 |
| org N vor Dentrifikationsst. | kgN/h | 4 | 4 | 0,7 |
| org N nach Dentrifikationsst. | kgN/h | 1,5 | 1,5 | 0,15 |
| $NO_3$– vor Dentrifikationsst. | kgN/h | 10 | 10 | 7,4 |
| $NO_3^-$ nach Dentrifikationsst. | kgN/h | – | – | – |
| ε –N vor Dentrifikationsst. | kgN/h | 24 | 24 | 10,7 |
| ε –N nach Dentrifikationsst. | kgN/h | 12,5 | 12,5 | 0,55 |
| $BSB_5$ | mg/l | <25 | <25 | <25 |
| $NH_4^+$ | mgN/l | < 1 | < 1 | <10 |
| org N | mgN/l | 3 | 3 | 3 |
| $NO_3^-$ | mgN/l | <20 | <20 | < 1 |
| ε – N | mgN/h | <23 | <23 | < 5 |
| Stickstoffelimination | % | >90 | >90 | >95 |
| PUR-Dichte | kg/m³ | 30 | 30 | 30 |
| PUR-Abmessungen |  | Würfel mit 15 mm Kantenlänge | | |
| PUR-Füllvolumen | % | 40 | 65 | 80 |
| Vol. des Denitrifikationsbeckens | m³ | 100 | 60 | 100 |
| Aufenthaltszeit | h | 2 | 1,2 | 2 |
| eingespeistes Rohabwasser zur Denitrifikation | m³/h | 50 | 50 | 13 |
| Rücklaufverhältnis (Denitrifikationsstufe) | % | 1000 | 1000 | 500 |
| Biomassenkonz. | g/l | 10 | 15 | 20 |

## Patentansprüche

1. Verfahren zur biologischen Denitrifikation von Abwasser, bei dem das zu denitrifizierende Abwasser in Gegenwart einer Kohlenstoffquelle durch einen Reaktor geleitet wird, in dem die denitrifizierenden Bakterien auf einem Trägermaterial angesiedelt werden, dadurch gekennzeichnet, dass in den Reaktor in stückiger Form offenzellige Schaumstoffteilchen mit geringem spezifischem Gewicht im trockenen Zustand von 20 bis 200 kg/m³, mit einem Volumen von 0,1 bis 75 cm³ und mit Makroporen von 0,1 bis 5 mm eingelagert werden.

2. Verfahren nach Anspruch 1, dadurch gekennzeichnet, dass Schaumstoffteilchen aus Polyurethan und/oder Harnstoff-Formaldehydharzen und/oder Polyäthylen und/oder Polypropylen und/oder Silikonpolymer verwendet werden.

3. Verfahren nach Anspruch 1 oder 2, dadurch gekennzeichnet, dass bei der Einlagerung der Schaumstoffteilchen in den Reaktor der Volumenanteil der Schaumstoffteilchen am Gesamtvolumen des Reaktors auf 10 bis 90% eingestellt wird.

4. Verfahren nach Anspruch 3, dadurch gekennzeichnet, dass der Reaktor bei einem Volumenanteil der Schaumstoffteilchen am Gesamtvolumen des Reaktors von 10 bis 40% als volldurchmischtes Becken betrieben wird.

5. Verfahren nach Anspruch 3, dadurch gekennzeichnet, dass der Reaktor bei einem Volumenanteil der Schaumstoffteilchen am Gesamtvolumen des Reaktors von 40 bis 70% als Schwebe- und/oder Wirbelbett-Reaktor betrieben wird.

6. Verfahren nach Anspruch 3, dadurch gekennzeichnet, dass der Reaktor bei einem Volumenanteil der Schaumstoffteilchen am Gesamtvolumen des Reaktors von 70 bis 90% als Festbett-Reaktor betrieben wird.

## Claims

1. A process for the biological denitrification of waste water, wherein the waste water to be denitrified is passed in the presence of a source of carbon through a reactor in which the denitrifying bacteria are established on a carrier material, characterised in that open-celled foam particles having a low specific gravity in the dry state of 20 to 200 kg/m³, a volume of 0.1 to 75 cm³ and macropores of 0.1 to 5 mm are stored in the reactor in the form of lumps.

2. A process as claimed in Claim 1, characterised in that foam particles of polyurethane and/or urea-formaldehyde resins, and/or polyethylene and/or polypropylene and/or silicone polymers are used.

3. A process as claimed in Claim 1 or Claim 2, characterised in that, when the foam particles are stored in the reactor, the proportion by volume of the foam particles with respect to the total volume of the reactor is set at 10 to 90%.

4. A process as claimed in Claim 3, characterised in that with a volume proportion of the foam particles with respect to the total volume of the reactor of 10 to 40%, the reactor is operated as a fully intermixed vessel.

5. A process as claimed in Claim 3, characterised in that with a volume proportion of the foam particles with respect to the total volume of the reactor of 40 to 70%, the reactor is operated as a floating bed reactor and/or a vortex-bed reactor.

6. A process as claimed in Claim 3, characterised in that with a volume proportion of the foam particles with respect to the total volume of the reactor of 70 to 90%, the reactor is operated as a solid bed reactor.

## Revendications

1. Procédé pour la dénitrification biologique d'eau résiduaire dans lequel on fait traverser à l'eau résiduaire à dénitrifier en présence d'une source de carbone un réacteur, dans lequel les bactéries de dénitrification sont colonisées sur un matériau de support, caractérisé en ce que l'on dispose dans le réacteur des particules de matériau alvéolaire à cellules ouvertes sous forme de morceaux d'un poids spécifique réduit de 20 à 200 kg/m³ à l'état sec, avec un volume de 0,1 à 75 cm³ et avec des macropores de 0,1 à 5 mm.

2. Procédé selon la revendication 1, caractérisé en ce que l'on utilise comme matériau alvéolaire du polyuréthane et/ou des résines urée-formaldéhydes et/ou des polyéthylènes et/ou des polypropylènes et/ou des polymères de silicone.

3. Procédé selon les revendications 1 ou 2, caractérisé en ce que, pour le garnissage des particules de matériau alvéolaire dans le réacteur, la fraction de volume des particules de matériau alvéolaire est de 10 à 90% rapporté au volume total du réacteur.

4. Procédé selon la revendication 3, caractérisé en ce que le réacteur est mis en service avec une fraction en volume des particules de matériau alvéolaire de 10 à 40% rapporté au volume total du réacteur, dans le cas d'un mélange intégral.

5. Procédé selon la revendication 3, caractérisé en ce que le réacteur est mis en service avec une fraction en volume des particules de matériau alvéolaire de 40 à 70% du volume total du réacteur, pour un réacteur à lit flottant et/ou fluidisé.

6. Procédé selon la revendication 3, caractérisé en ce que le réacteur est mis en service avec une fraction en volume des particules de matériau alvéolaire de 70 à 90% rapporté au volume total du réacteur, pour un réacteur à lit fixe ou stationnaire.